# EUROPEAN PATENT SPECIFICATION

(11) **EP 2 084 216 B1**
(45) Date of publication and mention of the grant of the patent: **07.08.2013**
(21) Application number: 07822117.3
(22) Date of filing: 31.10.2007
(51) Int. Cl.: C09C 3/06, C09D 4/00, B82Y 30/00, B82Y 20/00, C09C 1/00, C08K 3/22, C08K 9/04, C09C 3/08, C09D 133/00, C09D 133/08, C09D 133/10, G02B 1/00, C08J 5/00, C08K 5/00

(54) **RADIATION CURABLE HYBRID COMPOSITION AND PROCESS**
STRAHLUNGSHÄRTBARE HYBRIDZUSAMMENSETZUNG UND VERFAHREN
COMPOSITION HYBRIDE DURCISSABLE PAR RAYONNEMENT ET PROCÉDÉ

(30) Priority: 15.11.2006 US 858942 P; 06.07.2007 US 929646 P
(43) Date of publication of application: 05.08.2009
(73) Proprietor: Cytec Surface Specialties, S.A., 1070 Brussels (BE)
(72) Inventor: WANG, Zhikai (Jeffrey), Roswell, Georgia 30075 (US); TWEEDY, Harrell, Acworth, Georgia 30101 (US)
(74) Representative: Destryker, Elise Martine
(86) International application number: PCT/EP2007/061770
(87) International publication number: WO 2008/058849

(56) References cited:
- WO-A-03/055939
- US-A1- 2006 204 745
- US-A1- 2006 216 508

## Description

The present invention relates to the field of radiation cured compositions especially hybrid organic-inorganic composites used to prepare protective coatings having a high refractive index.

For many optical applications it is desirable for coatings to exhibit high refractive index. For example high refractive index coatings are applied to flat panel displays, such as liquid crystal displays (LCD), as a brightness enhancing film (also known as a prism sheet). Polarizer films used in LCDs also require hard coatings of high refractive index. It is also desirable that such coatings provide improved protection to the substrate, for example improved resistance e.g. to scratching.

Protective coatings can be formed from inorganic or organic materials. Inorganic materials (especially those containing nano sized particles) are known to provide high resistance and can be made of high refractive index but are complex and expensive to coat as they require methods such as vacuum chemical vapor deposition. Organic coatings can comprise polymers that are solvent-based, water-based and/or UV-curable. Solvent free radiation curable coatings have many advantages and can also provide materials of high refractive index. However as curing conditions are already optimized to obtain a high percentage of double bond conversion, high cross-linking density, and better surface cure, there is generally limited latitude to further improve durability of radiation curable coatings.

Hybrid organic inorganic composite materials have been proposed to obtain coatings with the combined properties of both inorganic and organic materials. A composite generally comprises inorganic fillers, often of nano size, dispersed in organic components such as solvents, surfactants and polymers. However hybrid composites are prone to inhomogeneity, agglomeration and precipitation of inorganic fillers so improved composites are still desired.

Composites can be produced by the sol-gel process where metal or semimetal alkoxides, chlorides, or nitrates are condensed or hydrolyzed. The sol gel process uses a low processing temperature, which allows organic compounds to be homogeneously incorporated into inorganic structures without decomposition. In general, the sol-gel derived hybrid composites described in the literature are either those where particles are formed in situ or those where particles are directly employed as starting materials.

In sol-gel systems, organic-inorganic hybrid coatings are cross-linked mainly by thermally induced SiOH to SiOH and SiOH to silicon alkoxide condensations, which generate highly cross-linked siloxane networks and water or alcohol as by-products. Other inorganic-organic hybrid systems that contain metal or semimetal salts (such as nitrates, alkoxides, etc.) may be formed similarly by condensation between metal or semi metal hydroxides.

Unfortunately, neither hydrolysis nor condensation reactions can be completed unless high temperature processes are used and this often decomposes the organic components or leads to cracking. At ambient temperature unreacted hydroxyl and alkoxyl groups remain in the final composite and both hydrolysis and condensation of the reactive groups would be expected to continue for a long time until a dynamic equilibrium is reached. It has been believed that composites produced by the sol gel method exhibit unstable rheology and coatings formed from them may lack both thermal and hydrolytical stability. It may also be undesirable to have composites that contain OH groups as these absorb electromagnetic radiation at wavelengths where transparency is required for some applications (such as optical fibers).

Such concerns have prevented use of such materials in commercial coatings. In addition such materials generally contain as impurities many materials (such as salts) which lower the refractive index and/or otherwise make such composites unsuitable for use in optical applications.

Surprisingly the applicant has discovered a process for making nano composites of high refractive index which overcome some or all of the aforementioned problems.

Some examples of prior art composites some of which are produced by sol gel processes include the following.

WO 02/51922 (UCB) describes powder coatings where surface properties such as hardness, solvent resistance, scratch resistance were significantly improved when the coatings incorporated 2%-5% of surface modified nano sized particles of titanium dioxide

WO 02/48272 (UCB) describes surface functionalized colorants for radiation curable inks which have been surface modified by methacrylate groups to improve pigment wetting and their rheological properties.

WO 03/055939 (UCB) describes use of ultrasound to make a composite by subjecting a dispersion of inorganic particles to ultrasonic agitation to produce a dispersion of nano-sized inorganic particles having at least one linear dimension having a mean size between 0.1 and 250 nm; and then reacting the nano-sized inorganic particles so obtained with an organic coupling agent to modify the surface of the particles to inhibit agglomeration of particles.

WO 03/014216 (UCB) describes nano-clays that incorporate UV curable resins to improve flame retardancy; catalytic activity for the synthesis of UA and EA; barrier properties toward water vapor; and promote adhesion to high surface energy substrates like polyethylene and polyester.

WO 04/020485 describes reactive, gel-free composites comprising particles capable of reaction with a radiation curable resin; a coupling agent for modification of the surface of said particles; a radiation curable resin; and a radiation curable salt capable of inhibiting gel formation in said composition. After curing these composites show excellent mechanical properties.

US 6656990 (Corning) describes a non sol gel method to produce a high refractive index composite where nano-particles of metal oxide are homogeneously dispersed within a solid polymer' matrix by a condensation process. Covalently bound to the exterior surface of these particles is a mixture of organometallic coupling agents, at least one of which is of a high refractive index. Corning contrasted this condensation method with a sol gel process where a metal oxide composite is prepared in the presence of many hydroxy groups in an aqueous and acidic system. Corning teaches (lines 29 to 51 col. 1) directly away from use of sol gel processes as they contain large concentrations of hydroxy groups with a "strong vibrational overtone at around 1550 nm". Corning argues that such sol gel materials are unsuitable for the desired end use of optical communications as it is difficult to remove the hydroxy groups. However the Corning invention requires use of a mixture of organometallic coupling agents which must be of high refractive index.

US 6521677 (DSM) describes pure metal particles that are linked via silyl to (meth)acrylic groups and radiation curable compositions comprising such particles.

US 6492540 (Pole Chic) describes a compound metal aliphatic acryl alkoxide having the general formula of M[OR₁OCOC(R₂)=CR₃R₄]ₙ wherein said compound is prepared for exchanging acryl alcohol with metal alkoxide.

US 5109080 (Virgina Tech) describes a high refractive-index ceramic/polymer hybrid material, having a refractive index of from 1.60 to 1.76, formed by the sol-gel synthesis of a metal alkoxide and an alkoxysilane-capped poly(arylene ether) polymeric component reactive therewith.

Document US 2006/216508 A1 discloses a process for preparing a polymer nanocomposite comprising: 50 weight % of a plurality of ZnS nanoparticles having an average size of 50 nm or less, a surface modified with a 3% by weight of carboxylic acid, wherein the carboxylic acid comprises at least one aryl group; and 50 weight % of an organic matrix comprising a radiation curable monomer, such as 2-carboxyethyl acrylate (examples [0069] to [0073], claims 1-24).

It is an object of the present invention to provide improved hybrid composites of high refractive index and a process for making them.

Therefore broadly in accordance with the present invention there is provided a process for preparing a hybrid nano-composite comprising the steps of:
a) providing an aqueous dispersion of inorganic nano-particles in a first carrier fluid ;
b) adding to the dispersion from step (a) at least one surface modifier;
c) removing at least part of the first carrier fluid to enhance the interaction between the surface modifier and the surface of the nano-particles;
d) in an optional washing step after surface modification is substantially complete,
   i) adding a suitable further carrier fluid to the nano-particle mixture and then
   ii) removing carrier fluid by azeotropic distillation;
e) adding a radiation curable polymer precursor to the mixture and optionally a photo initiator;
to form a hybrid composite comprising an intimate mixture of surface modified inorganic nano-particles and radiation curable polymer precursor.

Therefore the present invention further provides for an organic-inorganic hybrid nano-composite material having a refractive index no, greater than 1,52 the composite being a substantially homogenous mixture and comprising:
i) from 1% to 99% by weight of surface modified inorganic nano-particles where said particles comprise at least one organic surface modifier at their surface to increase the particles lipophobicity, said surface modifier comprising at least one acid selected from aromatic and/or sulfur-containing organic acids, phosphinic acids and phosphonic acids; wherin the surface modifier used to treat the inorganic nano-particles is from 20,0% to 200% by weight of the amount of the inorganic nano-particles;
ii) from 1% to 99% by weight of at least one radiation curable polymer precursor and optionally a photo initiator.
Optionally the hybrid composite is substantially free of volatile components.
Optionally the hybrid composite is substantially free of organic species comprising chlorine, bromine and/or iodine.
Optionally the hybrid composite is substantially free of organic species comprising sulfur.
Optionally hybrid composite is substantially free of hydroxy groups.

One preferred object of the optional washing step is to remove (and/or replace with other moieties) some, more preferably substantially all, of the material of low refractive index (e.g. of n_{D} ≤ 1.42) from the dispersion. Another preferred object of the optional washing step is to remove (and/or replace with other moieties) some, more preferably substantially all, of the hydroxy groups from the dispersion.

In the washing step the carrier fluid may optionally be removed until an end point where the mixture still just remains a fluid (e.g. liquid) and has not yet formed a completely solid solution. Optionally this may be defined as a nano-particle mixture having the minimum liquid content necessary to prevent substantial agglomeration, flocculation and/or precipitation of solids. Depending on the properties of the mixture (e.g. its transparency and clarity) this may be achieved by removal of fluid until just before solids are observed (if necessary by preceding beyond this point and adding further fluid and then removing again). However a small amount of suspended solids observed in the mixture may be acceptable at the end point. For example the mixture may optionally form a slurry comprising sufficient remaining liquid to just incorporate, disperse and/or cover the solids. The washing step may be repeated at least once, preferably a plurality of times until the end point, optionally a sufficient number of times until substantially no further volatile components are removed from the mixture (e.g. as measured by no further weight loss being measured in the mixture at the end point of the current washing step compared to the end point of the previous washing step).

Preferably the process of the present invention is carried out at about 25°C to 95°C, more preferably at about ambient temperature. The resultant hybrid composite may be a low viscosity liquid prior to curing, conveniently with a viscosity at 60 °C of less than about 20,000 cPs, more conveniently less than about 10,000 cPs and most conveniently less than 5,000cPs. Preferably the composite is a stable and homogenous liquid.

In another aspect of the present invention there is provided a process for preparing a protective coating of high refractive index comprising the steps of
(1) coating a substrate with a uncured hybrid nano-composite obtained and/or obtainable from the process described herein, optionally removing any remaining carrier fluid there from, and
(2) irradiating the coated substrate with actinic radiation to polymerize the polymer precursor;
to form a coated substrate having a homogenous film coating thereon comprising inorganic nano-particles substantially homogenously dispersed with a solid polymer matrix.

Preferably the coating film exhibits high optical clarity (most preferably T% > 95%) and/or has good scratch and abrasion resistance (more preferably better resistance than a polymer film formed from by radiation curing the polymer precursor alone).

Without wishing to be bound by any mechanism it is believed that in the process of the present invention the hydrophilic inorganic nano-particles (such as metal oxide) are surface modified to be substantially encompassed by lipophobic species. This facilities the transfer of the particle mixture as the dispersed phase within a hydrophobic organic resin matrix whilst retaining the original clarity, particle size, and system compatibility of the inorganic species thus contributing to a high refractive index of the final composite. Coatings formed using the nano-composites of the present invention have minimal problems due to shrinkage or cracking which are often seen in other cured films formed from resins with high functionalities. It is believed that this is because the composites of the present invention form homogeneously dispersed multi-nano-phase systems.
An aspect of the invention also provides the uncured hybrid composite obtained and/or obtainable as described by the process herein (prior to subsequent coating and/or irradiation). The composite may also be used in the coating step as low viscosity liquid for ease of application or may be used as a solid material (e.g. for powder coating).
A further aspect of the invention provides an organic-inorganic hybrid nano-composite material having a refractive index no greater than 1,52, the composite being a substantially homogenous mixture, optionally substantially free of solvent, and comprising:
i) from about 1% to about 99% by weight of surface modified inorganic nano-particles where said particles comprise a surface modifier at their surface to increase the particles lipophobicity; said surface modifier comprising at least one acid selected from aromatic and/or sulfur-containing organic acids, phoshinic acids and phosphonic acids ; wherein the surface modifier used to treat the inorganic nano-particles is from 20,0% to 200% by weight of the amount of the inorganic nano-particles ;
ii) from about 1% to about 99% by weight of at least one radiation curable polymer precursor and optionally a photo initiator.

If no other optional ingredients are added (such as those described herein) self evidently the amounts of each of components i) and ii) of the nano-composite will be selected so the total is 100%.

Preferred organic-inorganic hybrid nano composites materials of the invention (also referred to herein as nano-composites) have a refractive index no greater than about 1.52, especially ≥ ∼1.55. More preferably n_{D} ≥ ∼1.60, most preferably n_{D} ≥ ∼1.70, for example n_{D} ≥ ∼1.80.

Preferred nano-composites are substantially free of solvent i.e. comprise at least about 95% of solids, being defined as material which after radiation curing becomes solids, more preferably ≥ ∼99°C solids, most preferably consist of substantially 100% solids.

Preferred nano-composites are highly transparent to visible light (for example high clarity as measured by a T% value of at least about 95%).

In one particular embodiment of the invention the organic-inorganic hybrid nano-composite materials of the invention (and coatings formed there from) are substantially free of chloro, bromo and/or iodo species (preferably all halo species). For use in optical applications it is also preferred that nano-composites of the invention are substantially free of hydroxy groups. This may optionally be achieved by following the process steps of the present invention without further steps being required.

### Nano particles

The inorganic nano-particles used in the compositions and processes of the invention will now be more fully described. Usefully suitable inorganic nano-particles have a high refractive index (more usefully n_{D} ≥ 1.50) so as not to adversely decrease (and more usefully increase) the RI of the final composite to the desired values specified herein.

Preferably the amount of surface-modified inorganic nano-particles (component (i)) that are present in the composite material is from about 5% to about 80% by weight of the total composite, preferably from about 5% to about 60%; more preferably from about 10% to about 30%; and most preferably from about 12% to about 25%.

The unmodified inorganic nano particles may possess a net negative electrical charge, a net positive charge or be neutral. Advantageously the nano particles are positively charged before they are surface modified. Conveniently the surface of the unmodified nano-particles may exhibit hydrophilic character.

Preferably the inorganic nano-particles comprise (semi)metals, suitable inorganic compounds thereof (such as inorganic salts), and/or suitable mixtures and/or combinations thereof. As used herein (semi)metal(s) denotes one or more semi metal and/or metal, and/or mixtures and/or combinations thereof. More preferred particles comprise one or more (semi)metal oxide, (semi)metal sulfide, (semi)metal halogenite, pure (semi)metal and/or mixtures and/or combinations thereof. Most preferred particles comprise (semi)metal oxide and/or (semi)metal sulfide, for example metal oxide.

Usefully the (semi)metal or (semi)metal compound comprises a transitional metal, lanthanide, actinide and/or a (semi)metal in groups IIB, IVB or VB of the Periodic Table. More useful semi(metals) are selected from the group consisting of: antimony, barium, cerium, tin, titanium, vanadium, zinc, zirconium and/or suitable mixtures and/or combinations thereof. Most useful metals are those of high RI selected from Ti, Sn(IV), Ce(IV) and Zr. Conveniently the (semi)metal or (semi)metal salt does not substantially absorb visual light, more conveniently is substantially colorless.

Suitable metal oxides comprise BaTiO₃, CeO₂, SnO, ZnO, ZrO₂, TiO₂, Sb₂O₄, Sb₂O₃, Sb₂O₅, CdO, CaO₂, Cu₂O, FeO, Fe₂O₃, PbO, Al₂O₃, V₂O₅ especially BaTiO₃, CeO₂, SnO, ZnO, ZrO₂, any suitable mixtures thereof and/or metal oxides of similar crystal habit and/or physical properties. An example of a particularly suitable metal oxide nano-particles are the ZrO₂ nano-particles of average mean diameter ≤ 5 nm available commercially from Nyacol Nano Technologies, Inc. as a dispersion in acetic acid and water under the trade name Nyacol^{®} ZrO₂.

Suitable metal sulfides comprise Sb₂S₃, ZnS, any suitable mixtures thereof and/or similar suitable materials of similar crystal habit and/or physical properties.

Conveniently suitable metal halogenites comprise Snl₄ and/or similar suitable materials of similar crystal habit and/or physical properties. However it is preferred to use inorganic materials that are substantially free of halogen where possible.

Conveniently suitable pure metal particles comprise vanadium and/ and/or similar suitable materials of similar crystal habit and/or physical properties.

Mixtures and/or combinations of any of the specific oxides, sulfides, halogenites and metals described herein may also be used.

Optionally the nano-particles that are present in the nano composites of the present invention are not condensed (i.e. they may contain hydroxy groups) and may be produced by a sol gel process and/or any process other than that described in US 6656990. It is an advantage of the present process that contrary to the teaching in US 6656990 hydroxy species can be readily removed from the final nano-composite if necessary so the nano composites of the invention can be readily used in optical applications.

### Carrier fluid for nano particles

The carrier fluid used to disperse the nano particles in the first step of the present invention (step (a)) may comprise any suitable non aqueous liquid that does not cause the particles to precipitate. Preferred carrier fluids are selected from methyl ethyl ketone (MEK), methyl isobutyl ketone (MIBK), isopropanol, methanol, toluene, acetic acid; ethyl acetate and/or any suitable mixtures thereof, more preferably toluene and/or acetic acid.

### Surface modifier

The ingredients (surface modifiers) that may be used to modify the surface of the nano-particles in the compositions and processes of the invention will now be more fully described.

Preferably the amount of surface-modifier used to treat the inorganic nano-particles is from about 0.1% to about 250% by weight of the amount of the inorganic nano-particles, more preferably from 20.0% to 200% .

Preferably, the acid as parts of surface modifiers is present in an amount of from about 5% to about 150% by weight of the inorganic nano-particles.

The surface modifier is selected to impart a hydrophobic character to the surface of the inorganic nano-particles to increase their lipophilicity but also should have sufficiently high refractive index to impart the desired high refractive index to the nano-composite (and coatings formed there from). However it is also preferred that for environmental and other reasons the compositions of the invention are free of volatile components (such as organic species) that comprise species such as chloro, bromo, iodo.. Therefore it is preferred that the surface modifier comprises high RI species such as aromatic or other highly conjugated species.

Usefully suitable surface modifiers have a high refractive index (more usefully n_{D} ≥ 1.42) so as not to adversely decrease (and more usefully increase) the RI of the final composite to the desired values specified herein.

Suitable surface modifiers thus may comprise any suitable: chelating agent(s), coordinating agent(s); coupling agent(s); surface-treating agent(s); surfactant(s), emulsifier(s) and/or dispersant(s). The binding interactions between the surface of the nano-particles and surface-modifiers can be covalent bonds, chelating bonds, coordination bonds, ionic bonds, chemical adsorption, physical interactions and/or any suitable combinations thereof.

Optionally the surface-modifier may also provide additional functionality to the nano-particle surface to enable the particle to cross-link and/or co-polymerize with other ingredients in the composition (such as the radiation curable polymer precursors). Such reactive surface modifiers may comprise reactive functional groups (such as at least one 'activated unsaturated moiety' as defined herein, for example (meth)acrylates and/or vinyl ethers).

Preferred high RI surface modifiers comprise one or more of the following and/or mixtures thereof: organic silanes, metal chelates; oxyphospho species and/or organo species (optionally comprising one or more oxophospho and/or organo metallic group) comprising a plurality of oxygen atoms as electron donors (Lewis base) (such as carbonyl / carboxyl groups, oxo anions and/or hydroxy groups) and which organo species is preferably free of Cl, Br, I..

### Usefully the surface modifier is organic.

More preferred surface modifiers may comprise: organo species comprising a plurality (such as 2 to 4) of carbonyl/carboxyl groups; aromatically substituted carbonyl/carboxyl compounds; phosphates, phosphinates and/or phosphonates (including aromatic and/or alkyl (meth)acrylate derivatives thereof), organic acids (including alkanoic and/or aromatic acids); hydroxy complexes and/or organometallic esters.
More conveniently the organic acids are radiation cross-linkable and/or co-polymerizable with the polymer precursors.

Usefully the acidic surface modifiers also have a high refractive index (more usefully n_{D} ≥ 1.50) so as not to adversely decrease (and more usefully increase) the RI of the final composite to the desired value specified herein.

Organic acids may be selected from beta carboxy ethyl acrylate, acrylic acid, other acidic resins curable by UV (such as those acidic acrylates available commercially from Cytec under the registered trade marks Ebecryl^{®} 168 and Ebecryl^{®} 170); functional (meth)acrylates; vinyl ether(s) containing or other reactive bonds; cinnamic acid and derivatives; polyester acrylates and/or anhydride derivatives; AMPS and/or acrylamide derivatives); acidic (meth)acrylate and/or anhydride derivatives; and/or any other suitable reactive materials comprising acid groups; and/or any suitable mixtures thereof.

In other embodiment of the invention the acid may not comprise an 'activated unsaturated moiety' and for example will not polymerize under UV radiation even in the present of a photo initiator (i.e. are non UV reactive).

The surface modifier comprises at least one acid selected from aromatic and/or sulfur-containing organic acids, phosphonic acids and phosphinic acids. Preferred organic acids are diphenyl acetic acid; salicylic acid and derivatives (such as acetyl salicylic acid); benzoic acids and derivatives; and their (meth)acrylated derivatives and any suitable mixtures thereof.
Preferred phosphonic and phoshinic acids are aromatic phosphinic acids, especially diphenylphosphinic acid, and aromatic phosphonic acids, especially phenylphosphonic acid, and any suitable (meth)acrylated derivatives and mixtures thereof.

Most preferably the acid is selected from diphenyl acetic acid, diphenyl phosphinic acid and their (meth) acrylated derivatives and mixtures thereof.

The acid may also comprise a mixture of radiation curable and non UV reactive acids.

In an alternative embodiment of the invention it is preferred that the organic species used to prepare the nano composites of the invention (such as the organic acidic additives, radiation curable polymer precursors and organic surface modifiers) are not halogenated.. Usefully that the inorganic components used in the invention may also free of halo species so that in another embodiment composites of the invention are substantially free of any halo species.

Most preferred surface modifiers are silane free and selected from the group consisting of: optionally substituted hydrocarbo(di or tri)ones; (such as optionally substituted C₂-₂₀hydrocarbyl(di)ones, e.g. C₆₋₂₀alkandiones, acetylacetonates and/or ; benzoyl acetone, diphenyl acetic acid, phenyl phosphonic acid, diphenyl phosphinic acid, , phthalic acid and its derivatives, amino phosphonic acid and its derivatives, styrenephosphonic acid and its derivatives, aromatic phosphate, such as triphenylphosphate, ethylene methacrylate phosphate; titanates and/or zirconates.

Most preferred examples of surface modifiers are: 1-benzoyl acetone, diphenyl acetic acid, phenyl phosphonic acid, diphenyl phosphinic acid, triphenylphosphate, ethylene methacrylate phosphate; 2,2,6,6-tetramethyl-3,5-heptanedione and/or neopentyl(diallyl)oxy trimethacryl zirconate and any mixture thereof.

Other suitable organo metallic surface modifiers are described in US 6,656,990 (col. 5, line 25 to col. 6 line 19, especially those described in col. 5, lines 33 to 37 and col. 5 line 67 to col. 6 line 9). The whole contents of this document are hereby incorporated by reference.

In the process of the present invention the surface modifier may be added before, simultaneously with and/or after the radiation curable polymer precursors are added. In a preferred embodiment of the process the surface modifier is added before the radiation curable polymer precursor(s). The surface modification step is ideally carried out in the presence of acid.

### Carrier fluid for washing

The further carrier fluid used optionally to wash the nano particles in step (d) may comprise any suitable non aqueous liquid for example a suitable azeotropic mixture of solvent(s) and/or water which can be used to remove water and/or organic acid from the nano particles. Preferred azeotropic mixtures suitable as carrier fluids are selected from; MEK (methyl ethyl ketone); MIBK (methyl isobutyl ketone); ethanol; isopropanol; methanol; propanol; toluene; cyclohexane; ethyl acetate; acetic acid and/or any suitable mixtures thereof, more preferably azeotropic mixtures of ethyl acetate, toluene and water.

Conveniently the washing step (d) may be repeated with the same of a different carrier fluid. Optionally the washing step(s) may be continued until substantially all impurities of low refractive index (RI) such as organic salts (e.g. acetates) have been removed from the residual nano-particles.

### Radiation curable polymer precursor

Generally the amount of radiation curable polymer precursor (component (iii)) present in the composite material is from about 5% to about 90% by weight of the total composite Preferably the amount of radiation curable polymer precursor (component (iii)) present in the composite material is from about 20% to about 90% by weight of the total composite; more preferably from about 40% to about 80%; and most preferably from about 60% to about 75%.

The radiation curable polymer precursor used in the process of the present invention comprises at least one 'activated unsaturated moiety' as defined herein. Conveniently the polymer precursor comprises one or more radiation polymerizable double bond (optionally by well known processes such as free radical and/or cationic mechanisms) such as (meth)acrylated oligomers comprising for example ester, urethane, ether, silicon, halogen and/or phosphorus groups. The polymer precursor may comprise monodisperse species (e.g. a monomer) and/or polydisperse species (e.g. oligomers).

Usefully the polymer precursor has a high refractive index (more usefully n_{D} ≥ 1.42) so as not to adversely decrease (and more usefully increase) the RI of the final composite to the desired value specified herein. Therefore conveniently the polymer precursors comprise a substantial amount of radiation curable monomers or/and oligomers (such as vinyl ethers, other photo and/or thermal reactive entities) that also have.n_{D} ≥ 1.45, preferably ≥ 1.50.

Advantageously the polymer precursors may have a low viscosity that is less than about 5,000 cps at room temperature (25°C), preferably, less than about 3,000 cPs and most preferably less than about 1000 cps.
Usefully the polymer precursors may comprise at least one (more usefully one, two, three and/or a plurality of) functional groups selected from (meth)acrylate, epoxy, vinyl, vinyl ether and/or other unsaturated bonds, photocurable cyclic and/or aromatic ring substituent structures and/or combinations and/or mixtures thereof. Preferred polymer precursors comprise one or more (meth)acrylate functionalities.

More preferred polymer precursors comprise: copolymers with (meth)acrylate group(s) and one or more (poly)ol, (poly)urethane; (poly)ester; (poly)ether, (poly)epoxy, (poly)amino, (poly)silicone, poly(meth)acrylate, phosphorus-containing moieties, silicon-containing moieties; organic-inorganic hybrid materials; and/or combinations thereof any of which are radiation curable (preferably radical polymerizable).

Most preferred polymer precursors comprise: urethanes, epoxies, acrylates, methacrylates, vinyl ethers, vinyl esters, chlorinated esters, cationic curable resins, thermally curable resins; other reactive or latently reactive/peroxide or air-curable resins (such as alkyds etc); reactive materials such as Indene, styrene and derivatives; polymeric forms of reactive materials with remaining unsaturation and/or free-radical generation / polymerization sites; cinnamates and derivatives; and/or any suitable UV or EB curable resins.

An example of a suitable polymer precursor is a solution of trifunctional oligo-ether acrylate derived from trimethylolpropane (available commercially from Cytec under the registered trade mark Ebecryl^{®}160) diluted with either 50 % by weight of 2-phenyl ethyl acrylate (PEA) or phenyl thioethyl acrylate (PTEA).

### Other ingredients

Other non UV reactive components may be used in the process of the present invention and/or be incorporated in the nano composite of the present invention. Such components can be conveniently added with the polymer precursor or at other steps in the process.

Usefully the non UV reactive components (especially where present in non trace amounts) also have a high refractive index (more usefully n_{D} ≥ 1.50) so as not to adversely decrease (and more usefully increase) the RI of the final composite to the desired value specified herein.

Suitable non-UV reactive components may comprise:
additional materials of high refractive index (RI) (such as monomers, reagents, resins, polymers etc.) known in the art which are compatible with the other components of the formulation, and which may be added to further improve the clarity of the composite;
flame retardants (such as the halogen-free, phosphorus-based additive available commercially from Abermarle under the trade name Ncendex 30);
materials comprising optionally substituted aromatic rings (such as benzoates, e.g. diethyleneglycol benzoate and/or 1,2-propanediol benzoate);
aldehydes;
polymeric additives such as polystyrene, polyvinyltoluene, and/or co-polymeric materials such as polyvinyltoluene-co-alpha methyl styrene; and/or
any suitable mixtures thereof.

Other conventional ingredients well known to a skilled formulator can of course also be added as needed (and if compatible with the rest of the formulation) and so only the most relevant additional ingredients are highlighted below or listed herein.

Stabilizers and/or free-radical inhibitors may be added to compositions of the invention either alone or in combination to prevent polymerization of acrylate functionality prior to irradiation. Any suitable inhibitor well known to those skilled in the art may be used, including any of the following: quinone derivatives (such as hydroquinone (HQ), hydroquinone monomethyl ether (MEHQ), benzoquinone and/or 2,5-di-t-butylhydroquinone) 4-methoxyphenol, phenothiazine (PTZ), methylene blue, butylated hydroxy toluene (BHT), butylated hydroxy anisole (BHA), triphenylsulfonium (TPS), copper, phosphorous containing stabilizers and/or anti-oxidants (such as tris(nonylphenol)phosphite (TNPP)), flame retardants; and/or any other suitable anti-oxidant or free radical scavenger. Usually the inhibitors are used at a concentration of about 10 parts per million to about 5000 parts per million, more preferably from about 50 parts per million to about 1500 parts per million.

Photo-initiators (PIs) may be added to the radiation-curable compositions of the invention to produce free radicals or ionic species to initiate the polymerization process. Any suitable PI well known to those skilled in the art such as photo cleavage and/or photo-abstraction initiators. Typically PIs are added in an amount from about 4% to 12%; more typically from about 8% to 10% by total weight of the formulation.

### Definitions

The present invention is concerned with optical properties of the coatings in the visible part of the electro magnetic spectrum (i.e. for wavelengths of 400 nm to 700 nm). As the refractive index (RI) of a material varies with the wavelength of the radiation for convenience all the RI values specified herein (except where indicated to the contrary) are those measured with respect to radiation emitted by the Fraunhofer "D" line at the centre of the yellow sodium double emission at a wavelength of 589.29 nm. These RI values are also denoted herein by the symbol n_{D}. As used herein the term high refractive index refers to a material with n_{D} of ≥ 1.42. Preferred materials of the invention have n_{D} ≥1.50, more preferably n_{D} ≥1.56, more preferably n_{D} ≥1.58, more preferably n_{D} ≥1.60. Advantageously materials of the invention may have an n_{D} ≥1.70, more advantageously n_{D} ≥1.80.

The components used in the process and nano-composites of the invention should also ideally have a sufficiently high refractive index (optionally those values given in the preceding paragraph) to impart the desired high refractive index to the final product. However it is also preferred that for environmental and other reasons the compositions of the invention are substantially free of volatile components (such as organic species) that might also comprise chloro, bromo, iodo and selenium (and optionally sulfur and further optionally phosphorous) moieties which are known to impart high RI. Therefore it is preferred that the high RI organic species used herein comprise high RI moieties such as aromatic, and/or Sulphur and/or Phosphorus and/or other highly conjugated species rather than Cl, Br, I, moieties.

As used herein the term 'nano-sized' denotes at least one linear dimension having a mean size between about 0.1 and about 250 nm. A preferred mean size for the nano-sized materials described herein is less than about 100 nm, more preferably less than about 50 nm most preferably less than about 20 nm. Nano-sized materials exist with the nano-size in three dimensions (nano-particles), two dimensions (nano-tubes having a nano sized cross section, but indeterminate length) or one dimension (nano-layers having a nano-sized thickness, but indeterminate area). Usefully the present invention relate to composite materials that comprise nano-sized materials with the above mean values more usefully nano-particles.

As used herein 'radiation-curable' denotes a material which will polymerize when irradiated with actinic radiation optionally in the presence of another ingredient such as a photo-initiator. Preferred methods to achieve radiation polymerization comprise ultraviolet radiation and/or ionizing radiation, such as gamma rays, X-rays or an electron beam. The polymerization mechanism can be any suitable method that can be induced by radiation, thermal and/or peroxide initiation sources (e.g. free radical, cationic etc).

Throughout this specification, the term "activated unsaturated moiety" "is used to denote an species comprising at least one unsaturated carbon to carbon double bond in chemical proximity to at least one activating moiety. Preferably the activating moiety comprises any group which activates an ethylenically unsaturated double bond for addition thereon by a suitable electrophillic group.
Conveniently the activating moiety comprises oxy, thio, (optionally organo substituted)amino, thiocarbonyl and/or carbonyl groups (the latter two groups optionally substituted by thio, oxy or (optionally organo substituted) amino). More convenient activating moieties are (thio)ether, (thio)ester and/or (thio)amide moiet(ies). Most convenient "activated unsaturated moieties" comprise an "unsaturated ester moiety" which denotes an organo species comprising one or more "hydrocarbylidenyl(thio)carbonyl(thio)oxy" and/or one or more "hydrocarbylidenyl(thio)-carbonyl(organo)amino" groups and/or analogous and/or derived moieties for example moieties comprising (meth)acrylate functionalities and/or derivatives thereof. "Unsaturated ester moieties" may optionally comprise optionally substituted generic α,β-unsaturated acids, esters and/or other derivatives thereof including thio derivatives and analogs thereof.

Preferred activated unsaturated moieties are those represented by Formula 1'. 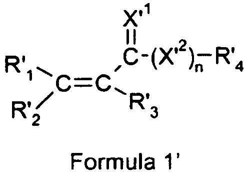 where
n is 0 or 1,
X'¹ is oxy or, thio
X'² is oxy, thio or NR'₅ (where R'₅ represents H or optionally substituted organo),
R'₁, R'_{2,} R'₃ and R'₄ each independently represent H, optionally substituents and/or optionally substituted organo groups; and
all suitable isomers thereof, combinations thereof on the same species and/or mixtures thereof.

It will be appreciated that the terms "activated unsaturated moiety"; "unsaturated ester moiety" and/or Formula 1' herein may represent a discrete chemical species (such as a compound, ion, free radical, oligomer and/or polymer) and/or any part(s) thereof. Thus Formula 1' may also represent multivalent (preferably divalent) radicals. Thus the options given herein for n', X'¹, X'², R'₁, R'_{2,} R'₃, R'₄ and R'₅ also encompass corresponding bi or multivalent radicals as appropriate.

More preferred moieties of Formula 1' (including isomers and mixtures thereof) are those where n' is 1; X'¹ is O; X'² is O, S or NR'₅;
R'₁, R'_{2,} R'₃, and 'R₄ are independently selected from: H, optional substituents and optionally substituted C₁₋₁₀hydrocarbo, and
where present R'₅ is selected from H and optionally substituted C₁₋₁₀hydrocarbo.

Most preferably n' is 1, X'¹ is O; X'² is O or S and R'₁, R'_{2,} R'₃ and R'₄ are independently H, hydroxy and/or optionally substituted C₁₆hydrocarbyl.

For example n' is 1, X'¹ and X'² are both O; and R'₁, R'_{2,} R'₃ and R'₄ are independently H, OH, and/or C₁₋₄alkyl.

For moieties of Formula 1' where n' is 1 and X'¹ and X'² are both O then:
when one of (R'₁ and R'₂) is H and also R'₃ is H, Formula 1' represents an acrylate moiety, which includes acrylates (when both R'₁ and R'₂ are H) and derivatives thereof (when either R'₁ or R'₂ is not H). Similarly when one of (R'₁ and R'₂) is H and also R'₃ is CH₃, Formula 1' represents an methacrylate moiety, which includes methacrylates (when both R'₁ and R'₂ are H) and derivatives thereof (when either R'₁ or R'₂ is not H). Acrylate and/or methacrylate moieties of Formula 1' are particularly preferred.

Conveniently moieties of Formula 1' are those where n' is 1; X'¹ and X'² are both O; R'₁ and R'₂ are independently H, methyl or OH, and R'₃ is H or CH₃.

More conveniently moieties of Formula 1' are those where n' is 1; X'¹ and X'² are both O; R'₁ is OH, R'₂ is CH₃, and R'₃ is H, and/or tautomer(s) thereof (for example of an acetoacetoxy functional species).

Most convenient unsaturated ester moieties are selected from: -OCO-CH=CH₂; -OCO-C(CH₃)=CH₂; acetoacetoxy, -OCOCH=C(CH₃)(OH) and all suitable tautomer(s) thereof.

It will be appreciated that any suitable moieties represented by Formula 1' could be used in the context of this invention such as other reactive moieties. However it is preferred to use moieties that are halo free, more preferably sulfur and halo free.

Unless the context clearly indicates otherwise, as used herein plural forms of the terms herein are to be construed as including the singular form and vice versa.

The term "comprising" as used herein will be understood to mean that the list following is non-exhaustive and may or may not include any other additional suitable items, for example one or more further feature(s), component(s), ingredient(s) and/or substituent(s) as appropriate.

The terms 'effective', 'acceptable' 'active' and/or 'suitable' (for example with reference to any process, use, method, application, preparation, product, material, formulation, compound, monomer, oligomer, polymer precursor, and/or polymers of the present invention and/or described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

Preferred utility of the composites present invention comprises forming coatings that imparting resistance to attack for example as described herein and/or have high refractive index for use in optical applications as described herein.

The terms 'optional substituent' and/or 'optionally substituted' as used herein (unless followed by a list of other substituents) signifies the one or more of following groups (or substitution by these groups): carboxy, sulpho, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulphonyl if directly attached to each other represent a sulphamoyl group). Preferred optional substituents comprise: carboxy, sulpho, hydroxy, amino, mercapto, cyano, methyl, halo, trihalomethyl and/or methoxy. More preferred subsituents are the preferred substituents that are halo and/or sulfur free.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulfur, more preferably from hydrogen, nitrogen, oxygen, phosphorus and/or sulfur, most preferably hydrogen, oxygen, nitrogen and phosphorus.

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof (more optionally oxy, amino, imino and/or nitilo). Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub-set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC≡"), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}organo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from 1 to 12, especially from 1 to 10 inclusive, for example from 1 to 4 carbon atoms.

As used herein chemical terms (other than IUAPC names for specifically identified compounds) which comprise features which are given in parentheses - such as (alkyl)acrylate, (meth)acrylate and/or (co)polymer - denote that that part in parentheses is optional as the context dictates, so for example the term (meth)acrylate denotes both methacrylate and acrylate.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimize the physical entanglement or interlocation with the resin or they may or may not comprise other reactive entities capable of chemically reacting and/or cross-linking with such other resins as appropriate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, π-adducts, solvates and/or hydrates); isotopically substituted forms, polymeric configurations [such as homo or copolymers, random, graft and/or block polymers, linear and/or branched polymers (e.g. star and/or side branched), cross-linked and/or networked polymers, polymers obtainable from di and/or tri-valent repeat units, dendrimers, polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

One embodiment of the process of the invention will now be described by way of illustration.

In a first step an acidic additive (as described herein) is charged to reaction vessel (e.g. stainless steel or glass) equipped with capability for agitation, heating, cooling, and reducing the pressure inside the vessel. The sufficient solvent (e.g. acetic acid) is added to dissolve the surface-modifiers, warming slightly if necessary. A dispersion of inorganic nano particles (such as an aqeuous dispersion of ZrO₂) is added dropwise to the surface-modifiers whilst the mixture is stirred to maintain a clear dispersion. The vessel is heated under reduced pressure and the water is removed by distillation in an azeotropic mixture. Further solvent is added to the vessel as necessary to maintain the azeotrope and prevent flocculation or precipitation within the liquid mixture until essentially all the water has been removed. The remaining volatile materials are removed from the vessel by heating still taking care to control the concentration of nano-particles in the liquid so no visible precipitation or crystallization is observed in the vessel.

An optional washing step may now be added to replace and remove species such as acetate or other materials that may contribute to a low refractive index of the final product.
The nano particle liquid mixture is heated in the vessel under a significant solid "wet" residue remains having a slurry or slush-like character (i.e. not fully dry). Further additional solvent (different from that first used) is added to re-disperse the slurry and then small amounts if water are added (to displace the acetate or 'low RI' groups). The liquid is removed again by distillation to obtain a slurry and the washing step is repeated at least once more to obtain the slurry again. Finally the washed slurry is re-dispersed in a different (i.e. non acetic acid) solvent.

A conventional UV curable oligomer resin (with an inhibitor) is added to the (optionally washed) dispersion of surface modified nano particles. Any volatile materials (water, acetic acid etc) are removed from the mixture under air sparging so that the stability of the UV resin is maintained and the resin doesn't thermally polymerize/cross-link.

The nano-composites of the invention may be collected by any suitable method for example using filtration media, such as appropriate mesh filter devices, celite and/or diatomateous earth. Further conventional formulation ingredients (such as further inhibitor additional diluting resins, etc.) may also be added to form the final product.

Another embodiment of the process of the invention will now be described by way of illustration.

An aqueous dispersion of nano-particles is added to a reaction vessel equipped with capability for agitation, heating, cooling, and vacuum) at a temperature between about 5 to about 80°C (preferably from about 10 to about 60° C; more preferably from about 20 to about 50° C). The dispersion should be initially clear or only slightly translucent / hazy.

The nano-particle dispersion is agitated at the same temperature ranges given above, optionally whilst being diluted with up to 50% by weight of solvent or until a slightly hazy appearance is observed in the liquid. It is preferred that the dispersion remains clear, is translucent or is hazy but suspended but if the dispersion contains flocculated or precipitated solid this is acceptable. When a diluting solvent is used, the solvent selected is preferably an organic solvent having both hydrophobic and hydrophilic character. More preferably the solvent does not contain hydroxy groups (such as methyl ethyl ketone, MEK) although hydroxy containing solvents such as iso-propanol, water and/or mixtures thereof are acceptable. When used, the dilution step should take at least ten minutes and may take longer.

An organic acid and a surface modifier (surface active agent) are optionally mixed together either neat (preferred) or diluted in solvent (optionally the same as used in the previous dilution step). This mixture is then added to the optionally diluted nano particles whilst they are being agitated at the same temperature ranges given above. The acid and surface modifier are preferably added at rate to minimize precipitate or agglomeration of solid in the agitating solution over a period of up to about eight hours, more preferably over up to about one hour.

Preferred organic acids as surface -modifiers comprise acidic moieties and preferably, UV reactive moieties (such as acrylic acid and/or beta carboxy ethyl acetate (β-CEA)); and/or have a high refractive index (such as trichloroacetic acid). Usefully the acid(s) have n_{D} >= 1.4, more usefully >= 1.52; most usefully >= 1.62.

Preferred other surface active agents comprise both chelating and/or coordinating moieties and also UV reactive moieties (such as 2,2,6,6-Tetramethyl-3,5-heptanedione, triphenylphosphate and/or neopentyl(diallyl)oxy, trimethacryl zirconate) and/or have a high refractive index. Usefully the surface active agent(s) have n_{D} >= 1.4, more usefully >= 1.52; most usefully >= 1.62.

After the surface modifiers have been added most of the water is removed from the mixture by addition of further solvent and then azeotropic distillation of the agitated mixture at a rate solvent removal of about 20 to about 100 % per hour (preferably 30-60 % per hour) under progressively reducing pressure (torr. versus STP, as far as the equipment will allow without 'bumping') and increasing temperature (within the range from about 20 to about 80°C, preferably from about 40 to about 60°C).

Solvent is added to the mixture in the amounts (either in portions or continuously) necessary to maintain the azeotrope and preferably to avoid flocculation or precipitation of the nano particles from the mixture if possible. If a haze is observed in the liquid additional solvent is added to the mixture and removal of water via the azeotrope is continued. If the solution does not clarify after adding solvent, liquid removal via the azeotrope is continued from the hazy (or flocculated/precipitated) liquid until all sources of free hydroxy groups (water, alcohols, other OH solvent if used in processing etc.) have been removed via the azeotrope with solvent.

Once substantially all of the free hydroxy components have been removed and/or the mixture is essentially clear, targeted amounts of a UV curable resin (optionally with an inhibitor) are added to the agitated mixture. The UV curable resin may be selected with a sufficiently high RI (preferably n_{D} ≥ 1.42; more preferably n_{D} ≥ 1.52, most preferably n_{D} ≥ 1.56) to achieve the RI targets specified herein for the final product. The temperature of both the mixture and resin to be added is preferably from about 5 to about 80 °C, more preferably from about 40° to about 60°C. If the mixture turns hazy after the resin is added, additional solvent is added and liquid removed by azeotropic distillation until the solution clears.

The remaining volatile components and solvent residue can also be removed by azeotropic distillation under reducing pressure (at the lowest pressure possible, < 50 mm Hg preferred) and preferably at a temperature from 20 to about 100 °C (more preferably from about 60 to about 95°C) whilst maintaining appropriate conditions to assure resin stability against gellation using air sparging and/or adequate inhibitor to prevent polymerization.

The final product is isolated using appropriate mesh to ensure that impurities are removed by the filter but that the inorganic nano-particles pass through the filter and remain in the filtrate. The necessary inhibition conditions are maintained.

Many other variations embodiments of the invention will be apparent to those skilled in the art and such variations are contemplated within the broad scope of the present invention. Another further aspect of the invention provides an inorganic-organic hybrid nano-composite obtained and/or obtainable from the process of the invention.

A yet still other aspect of the invention provides a high refractive index coating composition comprising a nano composite of the present invention. Compositions of the invention may also comprise other ingredient(s) such as a carrier or diluent, conventionally used to formulate a composition and/or make an effective coating (e.g. as a protective, high refractive index coating) in the use for which it is designed. If the carrier or diluent comprises a resin, the resin may be selected to optimize property such as hardness, durability and/or high refractive index. Compositions of the invention comprise those pre irradiation comprising the unpolymerized polymer precursors (monomers and oligomers) and those compositions after irradiation in situ as a cured coating on a substrate.

Optionally the coating composition of the present invention is applied as a powder coating and/or radiation curable coating by conventional well known methods.

Compositions of the invention can be applied to any type of substrate, but in particular may be applied to substantially transparent substrates such as glass and/or polymer film (e.g. polyester, polyethylene, and/or polypropylene). Coatings of the invention applied to a substrate exhibits useful protective properties with good resistance to external conditions. It is particularly preferred that the high refraction index compositions of the invention are used in optical applications. Such applications include coatings for displays (such as LCD or other preferably flat screen displays in electronic devices such as (laptops, PDAs, mobile phones, TVs, DVDs etc), and/or to coat other optical equipment such as wave guides, optical fibers, lens, mirrors, windows etc.

A still yet further aspect of the present invention provides an article (such as a substrate) suitable for use in an optical application, where said article is coated either with an uncured coating of the invention (i.e. prior to the article being irradiated with actinic radiation) or with a cured coating (i.e. after irradiation with actinic radiation). Such articles may be a complete product (e.g. mobile phone); a component for a product (e.g. a coated substrate which forms part of a display); and/or a consumable for use with another product (e.g. a display sub assembly). Preferably the coated articles are useful in one or more of the applications described herein (such as optical applications).

A still other aspect of the present invention provides a method for preparing an article of the invention as described herein comprising the steps of applying at least one coating composition and/or nano-composite of the present invention to at least part of the article, and irradiating the article with actinic radiation (e.g. UV or electron beam) to cure the coating thereon.

Another further aspect of the present invention provides use of at least one coating composition, nano-composite and/or coated article of the invention to prepare a product.

Further aspects of the invention and preferred features thereof are given in the claims herein.

### Examples

The present invention will now be described in detail with reference to the following non limiting examples which are by way of illustration only.

### Example 1

### (Non halogenated nano-composite and coating formulation)

### Step 1.1

Di-phenyl acetic acid (120 g from Alfa) is dissolved in 200 g of glacial acetic acid and the mixture is agitated and heated to 50°C. A dispersion (500 g) of acetic acid and water containing about 20.0% of ZrO₂ nano-particles (with a mean diameter of approximately 5 nanometers, from Nyacol Inc, see table below) was added dropwise to the acid mixture. After addition of the nano particles, 14.45 g of the surface modifier Ken-React^{®} NZ-33 (see table below) is added dropwise as agitation continued. Volatile components are removed from the resulting mixture under progressively reducing pressure, whilst the bulk temperature is maintained at a temperature of 50° to 60°C.

### Step 1.2

Once significant condensing of volatile components is no longer observed, 2-phenoxy ethyl acrylate 320 g (available commercially from Cytec under the registered trade mark Ebecryl^{®} 114) is added and the mixture is subject to progressively reducing pressure under an air sparge, until any remaining volatile components have been removed (as demonstrated by no further change in mass). The clear, slightly viscous product is diluted with an epoxy acrylate oligomer) (160g of the diacrylate ester of a bisphenol-A based epoxy, available commercially from Cytec under the registered trade mark Ebecryl^{®}150) and poured into a storage container.

The product is characterized as follows; refractive index at 20°C (measured with a Abby Refractometer, as a liquid) = 1.5675, very pale, clear to slightly hazy yellow liquid.

### Coating film obtained from Example 1.

Example 1 (20 g) is mixed with 0.6 g of Darocur 1173 (a conventional photo initiator available commercially from Ciba) and a coating film is drawn down in a conventional manner with an applicator bar on a substrate of polyester film. The coating is cured by several passes at 100 ft/min. under a UV lamp to form a brittle clear film coating which has a refractive index of 1.583.

### Example 2

### (Halogenated nano-composite and coating formulation)

The procedures for preparing Example 2 are analogous to the method described in Example 1 except the UV curable prepolymer used is a brominated analog (prepared by the applicant) of the Ebecryl^{®}150 epoxy acrylate (i.e. the bisphenol A moiety is substituted with four bromo groups). The ingredients used to prepare this product are listed in the following table.

**Table 1**

| Ingredient | | CAS # | Supplier | mass (g) |
|---|---|---|---|---|
| Nyacol^{®} | ZrO₂ (AC) | NA | Nyacol Nano Tech. Inc. | 32.00 |
| | (ZrO₂ | 1314-23-4 | | |
| | (acetic acid | 64-19-7 | | |
| | (water | 7732-18-5 | | |
| Ken-React^{®}NZ 33, | | 153590-16-0 | Kenrich Petrochem. | 1.20 |
| (Neopentyl(diallyl)oxy trimethacryl zirconate) | | | | |
| Diphenyl acetic acid | | 117-34-0 | Alfa | 4.81 |
| Albritect^{®}6835 | | 56268-03-2 | Rhodia | 1.20 |
| | (ethylene methacrylate phosphate co-monomer - a clear, pale-yellow liquid) | | | |
| Diphenyl phosphinic | | 1707-03-5 | Fulka | 0.60 |
| | acid | | | |
| UV curable prepolymer | | | made by Cytec | 22.55 |
| (an oligomer which is an acrylated diglycidyl-epoxy derivative of tetrabromo bisphenol A) | | | | |
| Phenyl thiol ethyl | | 95175-38-5 | BIMAX Inc. | 28.18 |
| | acrylate | | | |
| FR 245 | | 25713-60-4 | Albermable | 9.39 |
| | (2,4,6-Tris(2,4,6-tribromophenoxy)-1,3,5-triazine, a flame retardant) | | | |
| Darocur^{®} 1173 | | 7473-98-5 | Ciba Specialties | 0.60 |
| | (a liquid photo-initiator) | | | |
| Total | | | | 100.60 |

The product is characterized as follows; refractive index (measured with a Fischer Scientific Co, Refractometer) = 1.5851. Clear liquid with > 99 % solids.

### Coating film obtained from Example 2.

Example 2 (20 g) is mixed with 0.6 g of Darocur^{®} 1173 (a conventional photo initiator) and a coating film is drawn down in a conventional manner with an applicator bar on a substrate of PET film. The coating is UV cured by four passes at 100 ft/min. under a two medium pressure mercury H lamps to form a film coating which has a refractive index of 1.6120 (at 632 nm determined by using Metricon Prism Coupler).

### Example 3

### (Non Halogenated, sulfur-containing nano-composite and coating formulation)

The following surface-modification agents are mixed together. 1-benzoyl acetone (0.26 g); diphenyl acetic acid (2.55 g); diphenyl phosphinic acid (0.26 g) and Albritect^{®} 6835 (0.26 g, see table). The mixture is dissolved totally (3.33 g) in acetic acid (51 g) at a temperature of 60 °C to form a surface-modification solution.
An aqueous dispersion (42.5 g) of nano-particles is agitated. The dispersion comprises 20 % by weight of zirconium dioxide nano particles, 12 % by weight of acetic acid and 68% by weight water and is obtained as Nyacol^{®} ZrO₂ from Nyacol Nano Technologies, Inc.).

The surface-modification solution is added slowly to the agitated nano-particle dispersion to obtain a mixture with a viscosity after addition of -20 cP at 25 °C. The mixture is then heated to 60 °C and is held for two hours while being agitated with a Rotovap without reduced pressure. Then the mixture is heated in the Rotovap to remove the acetic acid and water under azeotropic conditions. The distillate contains approximately 12 % by weight of acetic acid and 88 % by weight of water. After 95% of the water and acetic acid has been removed the evaporation is stopped to leave a residue of a not completely dry wet slurry of nano-particles.

Ethyl acetate (100 ml) is added to the slurry followed by a further mixture of ethyl acetate (100 ml), toluene (50 ml) and water (10 grams). The mixture is heated again under azeotropic conditions until 95% of the mixture of ethyl acetate / toluene / water / residual acetic acid has been removed and the nano-particle dispersion turns to a wet, not completely dry slurry. This washing step is repeated at least once

A further 100 ml of ethyl acetate is added to the slurry to dissolve it and then a UV curable resin consisting of 20 g of a proprietary sulfur containing epoxy acrylate (prepared by the applicant) and 10 g of phenyl thiol ethyl acrylate (from BIMAX Inc.) is added to the surface-modified nano-particles and mixed for 30 minutes. The mixture is heated under air sparging and reduced pressure (max of 30 mbar) for 1 to 3 hours at 60°C followed by one hour at -95 °C to remove all solvents and the remaining acetic acid and water.

The resultant product is characterized as follows; refractive index of 1.5835 (measured with a Fischer Scientific Co, Refractometer); clear liquid with > 99 % solids.

### Coating film obtained from Example 3.

Example 3 (20 g) is mixed with 0.6 g of Darocur 1173 (a conventional photo initiator) and a coating film is drawn down in a conventional manner with an applicator bar on a substrate of PET film. The coating is UV cured by four passes at 100 ft/min. under a two medium pressure mercury H lamps to form a film coating which has a refractive index of 1.6063 (at 632 nm determined using Metricon Prism Coupler).

### Example 4

The following surface-modification agents are mixed together : 0.4750 g of neopentyl(diallyl)oxy trimethacryl zirconate (Ken-React^{®}NZ 33), 26.53 g of triphenylphosphate and 9.48 g of diphenylphosphinic acid in about 100g of acetic acid. Into this mixture is added 100 g of a dispersion comprising 20 % by weight of zirconium dioxide nano particles, 12 % by weight of acetic acid and 68% by weight water, obtained as Nyacol^{®} ZrO₂ from Nyacol Nano Technologies, Inc.
The mixture is then heated to 90 °C in a Rotovap and the vacuum is gradually reducted to 330 millibar. After the majority of water is evaporated and the solution remains clear, about 150 g of material remains.
Then 50 g of phenylthioethyl acrylate is added to the surface-modified nano-particles under moderate agitation. The azeotropic evaporation is then continued in the Rotavap until all volatiles are evaporated out. The vacuum is kept below 30 mbar with an air sparge at 60 °C for 30 to 60 minutes and then the temperature is raised to 95 °C for 12 hours.
The resultant product is characterized as follows; refractive index of 1.5802 (measured with a Fischer Scientific Co, Refractometer); clear liquid with >99% solids.

### Coating film obtained from Example 4.

Example 4 (15 g) is mixed with 15 g of novalak epoxy acrylate with functionality 2.2 and 0.15 g of Irgacure 819 (a conventional photo initiator) and a coating film is drawn down in a conventional manner with an applicator bar on a substrate of polyester film. The coating is UV cured by three passes at 55 ft/min. under a two medium pressure mercury H lamps to form a film coating which has a refractive index of 1.5904 (at 632 nm determined using Metricon Prism Coupler).

## Claims

1. An organic-inorganic hybrid nano-composite material of high refractive index n_{D}, greater than 1.52, the composite being a substantially homogenous mixture and comprising:
i) from 1% to 99% by weight of surface modified inorganic nano-particles where said particles comprise at least one organic surface modifier at their surface to increase the particles lipophobicity, said surface modifier comprising at least one acid selected from aromatic and/or sulfur-containing organic acids, phosphinic acids and phosphonic acids; wherein the surface modifier used to treat the inorganic nano-particles is from 20,0% to 200% by weight of the amount of the inorganic nano-particles ;
ii) from 1% to 99% by weight of at least one radiation curable polymer precursor and optionally a photo initiator.

2. A nano-composite as claimed in either preceding claim, where the inorganic nano-particles comprise ZrO₂, ZnO, SnO, CeO₂, BaTiO₃ , Sb₂S₃, ZnS, SnI₄, V₂O₅, TiO₂, Sb₂O₄, Sb₂O₃, Sb₂O₅, CdO, CaO₂ , Cu₂O, FeO, Fe₂O₃, PbO, Al₂O₃, and/or mixtures thereof.

3. A nano-composite as claimed in any preceding claim, where the surface modified inorganic nano-particles dispersed therein have a mean diameter of less than 50 nm.

4. A nano-composite as claimed in any preceding claim, where the surface modifier comprises one or more: organic silanes, metal chelates; oxyphospho species, and/or organo species comprising a plurality of oxygen atoms as electron donors; and where optionally the surface modifier is substantially free of Cl, Br, I.

5. A nano-composite as claimed in the immediately preceding claim, where the surface modifier comprises: organo species comprising a plurality of carboxyl groups; aromatically substituted carboxy compounds; phosphates, phosphinates and/or phosphonates, organic acids; hydroxy complexes and/or organometallic esters.

6. A nano-composite as claimed in the immediately preceding claim, where the surface modifier comprises optionally substituted hydrocarbo(di or tri)ones; benzoyl acetone, aromatic and/or sulfur-contained acetic acid, aromatic and/or sulfur-contained phosphonic acid, aromatic and/or sulfur-contained phosphinic acid, aromatic and/or sulfur-contained phosphate; (meth) acrylated phosphate; titanates and/or zirconates.

7. A nano-composite as claimed in the immediately preceding claim, where the surface modifier comprises: 1-benzoyl acetone, diphenyl acetic acid, diphenylphosphinic acid, phenyl phosphonic acid, triphenylphosphate, ethylene methacrylate phosphate; 2,2,6,6-tetramethyl-3,5-heptanedione and/or neopentyl(diallyl)oxy trimethacryl zirconate.

8. A nano-composite as claimed in any preceding claim, where the acid as parts of surface modifiers is present in an amount of from 5% to 150% by weight of inorganic nanoparticles.

9. A nano-composite as claimed in claim 1, where the acid is selected from diphenyl acetic acid, diphenyl phosphinic acid and their (meth) acrylated derivatives and mixtures thereof.

10. A nano-composite as claimed in any preceding claim, where the radiation curable polymer precursor(s) has n_{D} ≥ 1.42.

11. A nano-composite as claimed in any preceding claim, where the radiation curable polymer precursor(s) comprises one or more functional groups selected from (meth)acrylate, epoxy, vinyl, vinyl ether and/or other unsaturated bonds, photocurable cyclic and/or aromatic ring substituent structures and/or combinations and/or mixtures thereof.

12. A nano-composite as claimed in the immediately preceding claim, where the radiation curable polymer precursor(s) comprises one or more (meth)acrylate functionalities.

13. A process for preparing a hybrid nano-composite as claimed in any preceding claim, the process comprising the steps of:
a) providing an aqeuous dispersion of inorganic nano-particles in a first carrier fluid ;
b) adding to the dispersion from step (a) at least one surface modifier;
c) removing at least part of the first carrier fluid to enhance the interaction between the surface modifier and the surface of the nano-particles;
d) in an optional washing step after surface modification is substantially complete,
i) adding a suitable further carrier fluid to the nano-particle mixture and then
ii) removing carrier fluid by azeotropic distillation;
e) adding a radiation curable polymer precursor to the mixture and optionally a photo initiator ;
to form a hybrid composite comprising an intimate mixture of surface modified inorganic nano-particles and radiation curable polymer precursor.

14. A process for preparing a coating of high refractive index comprising the steps of
(1) coating a substrate with a uncured hybrid nano-composite obtained and/or obtainable from the process as claimed in claim 13, optionally removing any remaining carrier fluid there from, and
(2) irradiating the coated substrate with actinic radiation to polymerize the polymer precursor;
to form a coated substrate having a homogenous coating film thereon comprising inorganic nano-particles substantially homogenously dispersed with a solid polymer matrix; where the film has high clarity measured by a T% value of at least 95% and scratch and abrasion resistance better than a polymer film formed by radiation curing the polymer precursor alone.

## Patentansprüche

1. Organisch-anorganisches hybrides Nanoverbundstoffmaterial mit einem hohen Brechungsindex n_{D} von mehr als 1,52, wobei der Verbundstoff ein im Wesentlichen homogenes Gemisch ist und:
i) 1 bis 99 Gew.-% oberflächenmodifizierte anorganische Nanopartikel, wobei die Partikel mindestens einen organischen Oberflächenmodifikator an ihrer Oberfläche zum Erhöhen der Lipophobie der Partikel umfassen, wobei der Oberflächenmodifikator mindestens eine Säure, ausgewählt aus aromatischen und/oder Schwefel enthaltenden organischen Säuren, Phosphinsäuren und Phosphonsäuren, umfasst; wobei der zur Behandlung der anorganischen Nanopartikel verwendete Oberflächenmodifikator 20,0 bis 200 Gew.-% der Menge der anorganischen Nanopartikel ausmacht;
ii) 1 bis 99 Gew.-% von zumindest einem strahlungshärtbaren Polymerpräkursor und gegebenenfalls einen Photoinitiator umfasst.

2. Nanoverbundstoff nach dem vorstehenden Anspruch, wobei die anorganischen Nanopartikel ZrO₂, ZnO, SnO, CeO₂, BaTiO₃, Sb₂S₃, ZnS, SnI₄, V₂O₅, TiO₂, Sb₂O₄, Sb₂O₃, Sb₂O₅, CdO, CaO₂, Cu₂O, FeO, Fe₂O₃, PbO, Al₂O₃ und/oder Gemische davon umfassen.

3. Nanoverbundstoff nach einem der vorstehenden Ansprüche, wobei die darin dispergierten oberflächenmodifizierten anorganischen Nanopartikel einen mittleren Durchmesser von weniger als 50 nm haben.

4. Nanoverbundstoff nach einem der vorstehenden Ansprüche, wobei der Oberflächenmodifikator ein oder mehrere: organische Silane, Metallchelate; Oxyphosphospezies und/oder Organospezies, umfassend eine Vielzahl von Sauerstoffatomen als Elektronendonatoren, umfasst, und wobei der Oberflächenmodifikator gegebenenfalls im Wesentlichen frei von Cl, Br, I ist.

5. Nanoverbundstoff nach dem direkt vorstehenden Anspruch, wobei der Oberflächenmodifikator: Organospezies, umfassend eine Vielzahl von Carboxylgruppen; aromatisch substituierte Carboxyverbindungen; Phosphate, Phosphinate und/oder Phosphonate, organische Säuren; Hydroxykomplexe und/oder organometallische Ester umfasst.

6. Nanoverbundstoff nach dem direkt vorstehenden Anspruch, wobei der Oberflächenmodifikator gegebenenfalls substituierte Hydrocarbo(di- oder -tri)one; Benzoylaceton, aromatische und/oder Schwefel enthaltende Essigsäure, aromatische und/oder Schwefel enthaltende Phosphonsäure, aromatische und/oder Schwefel enthaltende Phosphinsäure, aromatisches und/oder Schwefel enthaltendes Phosphat; (meth)acryliertes Phosphat; Titanate und/oder Zirconate umfasst.

7. Nanoverbundstoff nach dem direkt vorstehenden Anspruch, wobei der Oberflächenmodifikator: 1-Benzoylaceton, Diphenylessigsäure, Diphenylphosphinsäure, Phenylphosphonsäure, Triphenylphosphat, Ethylenmethacrylatphosphat; 2,2,6,6-Tetramethyl-3,5-heptandion und/oder Neopentyl(diallyl)oxytrimethacrylzirconat umfasst.

8. Nanoverbundstoff nach einem der vorstehenden Ansprüche, wobei die Säure als Teil des Oberflächenmodifikators in einer Menge von 5 bis 150 Gew.-% der anorganischen Nanopartikel vorliegt.

9. Nanoverbundstoff nach Anspruch 1, wobei die Säure ausgewählt ist aus Diphenylessigsäure, Diphenylphosphinsäure und deren (meth)acrylierten Derivaten und Gemischen davon.

10. Nanoverbundstoff nach einem der vorstehenden Ansprüche, wobei der/die strahlungshärtbare(n) Polymerpräkursor(en) einen n_{D} ≥ 1,42 aufweisen.

11. Nanoverbundstoff nach einem der vorstehenden Ansprüche, wobei der/die strahlungshärtbare(n) Polymerpräkursor(en) eine oder mehrere funktionelle Gruppen, ausgewählt aus (Meth)acrylat, Epoxy, Vinyl, Vinylether und/oder anderen ungesättigten Bindungen, photochemisch härtbare zyklische und/oder aromatische
Ringsubstituentenstrukturen und/oder Kombinationen und/oder Gemische davon umfasst/umfassen.

12. Nanoverbundstoff nach dem direkt vorstehenden Anspruch, wobei der/die strahlungshärtbare(n) Polymerpräkursor(en) eine oder mehrere (Meth)acrylat-Funktionalitäten umfasst/umfassen.

13. Verfahren zur Herstellung eines hybriden Nanoverbundstoffs nach einem der vorstehenden Ansprüche, wobei das Verfahren die Schritte:
a) Bereitstellen einer wässerigen Dispersion aus anorganischen Nanopartikeln in einer ersten Trägerflüssigkeit;
b) Zugeben von mindestens einem Oberflächenmodifikator zu der Dispersion aus Schritt (a);
c) Entfernen zumindest eines Teils der ersten Trägerflüssigkeit, um die Wechselwirkung zwischen dem Oberflächenmodifikator und der Oberfläche der Nanopartikel zu verstärken;
d) in einem optionalen Waschschritt, nachdem die Oberflächenmodifikation weitestgehend abgeschlossen ist,
i) Zugeben einer geeigneten weiteren Trägerflüssigkeit zu dem Nanopartikelgemisch und dann
ii) Entfernen der Trägerflüssigkeit durch azeotrope Destillation;
e) Zugeben eines strahlungshärtbaren Polymerpräkursors zu dem Gemisch und gegebenenfalls eines Photoinitiators;
unter Bildung eines hybriden Verbundstoffes, umfassend ein inniges Gemisch aus oberflächenmodifizierten anorganischen Nanopartikeln und strahlungshärtbarem Polymerpräkursor, umfasst.

14. Verfahren zur Herstellung einer Beschichtung mit hohem Brechungsindex, umfassend die Schritte
(1) Beschichten eines Substrats mit einem nicht gehärteten hybriden Nanoverbundstoff, erhalten und/oder erhältlich aus dem Verfahren nach Anspruch 13, gegebenenfalls Entfernen jeglicher verbliebener Trägerflüssigkeit daraus und
(2) Bestrahlen des beschichteten Substrats mit aktinischer Strahlung, um den Polymerpräkursor zu polymerisieren;
unter Bildung eines beschichteten Substrats mit einem homogenen Beschichtungsfilm darauf, umfassend anorganische Nanopartikel, die im Wesentlichen homogen mit einer festen Polymermatrix dispergiert sind; wobei der Film eine hohe Klarheit aufweist, **gekennzeichnet durch** einen Wert T% > 95 % und eine bessere Kratz- and Abriebbeständigkeit als ein Polymerfilm, der **durch** Strahlungshärten des Polymerpräkursors allein gebildet wurde.

## Revendications

1. Matériau nanocomposite hybride organique-inorganique de haut indice de réfraction n_{D}, supérieur à 1,52, le composite étant un mélange sensiblement homogène et comprenant :
i) de 1 % à 99 % en poids de nanoparticules inorganiques modifiées en surface où lesdites particules comprennent au moins un modificateur de surface organique à leur surface pour augmenter la lipophobicité des particules, ledit modificateur de surface comprenant au moins un acide choisi parmi les acides organiques aromatiques et/ou contenant du soufre, les acides phosphiniques et les acides phosphoniques ; où le modificateur de surface utilisé pour traiter les nanoparticules inorganiques est de 20,0 % à 200 % en poids de la quantité des nanoparticules inorganiques ;
ii) de 1 % à 99 % en poids d'au moins un précurseur de polymère durcissable par rayonnement et facultativement un photoinitiateur.

2. Nanocomposite selon la revendication précédente, dans lequel les nanoparticules inorganiques comprennent ZrO₂, ZnO, SnO, CeO₂, BaTiO₃, Sb₂S₃, ZnS, SnI₄, V₂O₅, TiO₂, Sb₂O₄, Sb₂O₃, Sb₂O₅, CdO, CaO₂, Cu₂O, FeO, Fe₂O₃, PbO, Al₂O₃, et/ou leurs mélanges.

3. Nanocomposite selon l'une quelconque des revendications précédentes, dans lequel les nanoparticules inorganiques modifiées en surface dispersées en son sein ont un diamètre moyen de moins de 50 nm.

4. Nanocomposite selon l'une quelconque des revendications précédentes, dans lequel le modificateur de surface comprend un ou plusieurs éléments parmi : des silanes organiques, des chélates de métaux ; des espèces oxyphospho et/ou des espèces organiques comprenant une pluralité d'atomes d'oxygène en tant que donneurs d'électrons ; et où facultativement le modificateur de surface est sensiblement exempt de Cl, Br ou I.

5. Nanocomposite selon la revendication immédiatement précédente, dans lequel le modificateur de surface comprend : des espèces organiques comprenant une pluralité de groupes carboxyles ; des composés carboxys aromatiquement substitués ; des phosphates, phosphinates et/ou phosphonates, des acides organiques ; des complexes hydroxys et/ou des esters organométalliques.

6. Nanocomposite selon la revendication immédiatement précédente, dans lequel le modificateur de surface comprend des hydrocarbo(di ou tri)ones facultativement substituées ; de la benzoylacétone, de l'acide acétique contenant du/des aromatique(s) et/ou contenant du soufre, de l'acide phosphonique contenant du/des aromatique(s) et/ou contenant du soufre, de l'acide phosphinique contenant du/des aromatique(s) et/ou contenant du soufre, du phosphate contenant du/des aromatique(s) et/ou contenant du soufre ; du phosphate (méth)acrylé ; des titanates et/ou des zirconates.

7. Nanocomposite selon la revendication immédiatement précédente, dans lequel le modificateur de surface comprend : de la 1-benzoylacétone, de l'acide diphénylacétique, de l'acide diphénylphosphinique, de l'acide phénylphosphonique, du phosphate de triphényle, du méthacrylate phosphate d'éthylène ; de la 2,2,6,6-tétraméthyl-3,5-heptanedione et/ou du zirconate de néopentyl(diallyl)oxy triméthacryle.

8. Nanocomposite selon l'une quelconque des revendications précédentes, dans lequel l'acide parmi les modificateurs de surface est présent dans une quantité de 5 % à 150 % en poids des nanoparticules inorganiques.

9. Nanocomposite selon la revendication 1, dans lequel l'acide est choisi parmi l'acide diphénylacétique, l'acide diphénylphosphinique et leurs dérivés (méth)acrylés et leurs mélanges.

10. Nanocomposite selon l'une quelconque des revendications précédentes, dans lequel le ou les précurseurs de polymère durcissables par rayonnement ont n_{D} ≥ 1,42.

11. Nanocomposite selon l'une quelconque des revendications précédentes, dans lequel le ou les précurseurs de polymère durcissables par rayonnement comprennent un ou plusieurs groupes fonctionnels choisis parmi le (méth)acrylate, l'époxy, le vinyle, le vinyléther et/ou d'autres liaisons insaturées, des substituants cycliques photodurcissables et/ou des substituants aromatiques et/ou leurs combinaisons et/ou leurs mélanges.

12. Nanocomposite selon la revendication immédiatement précédente, dans lequel le ou les précurseurs de polymère durcissables par rayonnement comprennent une ou plusieurs fonctionnalités (méth)acrylates.

13. Procédé de préparation d'un nanocomposite hybride tel que revendiqué dans l'une quelconque des revendications précédentes, le procédé comprenant les étapes consistant à :
a) fournir une dispersion aqueuse de nanoparticules inorganiques dans un premier fluide porteur ;
b) ajouter à la dispersion de l'étape a) au moins un modificateur de surface ;
c) éliminer au moins une partie du premier fluide porteur pour renforcer l'interaction entre le modificateur de surface et la surface des nanoparticules ;
d) dans une étape de lavage facultative après que la modification de surface est sensiblement achevée,
- i) ajouter un fluide porteur supplémentaire approprié au mélange de nanoparticules puis
- ii) éliminer le fluide porteur par distillation azéotropique ;
e) ajouter un précurseur de polymère durcissable par rayonnement au mélange et facultativement un photoinitiateur ;
pour former un composite hybride comprenant un mélange intime de nanoparticules inorganiques modifiées en surface et d'un précurseur de polymère durcissable par rayonnement.

14. Procédé de préparation d'un revêtement de haut indice de réfraction comprenant les étapes consistant à :
(1) revêtir un substrat avec un nanocomposite hybride non durci obtenu et/ou pouvant être obtenu par le procédé tel que revendiqué dans la revendication 13, en éliminant facultativement tout fluide porteur restant, et
(2) irradier le substrat revêtu avec un rayonnement actinique pour polymériser le précurseur de polymère ;
pour former un substrat revêtu ayant un film de revêtement homogène dessus comprenant des nanoparticules inorganiques dispersées de manière sensiblement homogène avec une matrice de polymère solide ; où le film a une haute clarté **caractérisée par** une valeur T % > 95 % et une résistance à la rayure et à l'abrasion supérieures à un film de polymère formé par durcissement par rayonnement du précurseur de polymère seul.
